# EUROPEAN PATENT APPLICATION

(11) **EP 4 512 955 A1**
(43) Date of publication of application: **26.02.2025**
(21) Application number: 24195119.3
(22) Date of filing: 19.08.2024
(51) Int. Cl.: D21H 17/67, C01F 11/18, D21H 17/70, D21H 23/14, D21H 23/20

(54) **METHOD AND REACTOR FOR PRODUCING PCC**

(30) Priority: 21.08.2023 FI 20235928
(71) Applicant: Wetend Technologies Oy, 57230 Savonlinna (FI)
(72) Inventor: Matula, Jouni, 57600 SAVONLINNA Finland (FI)
(74) Representative: Genip Oy

(57) **Abstract**

The present invention relates to a method and a reactor to crystalize calcium carbonate and to form crystals in a liquid flow (F) with the concentration of 2.5-5% inside or on the surfaces of a fiber dispersion containing solid matter,

- carbon dioxide (CO2) (CO₂) and lime milk (LM) (Ca(OH)₂) are fed into liquid flow (F) to get them to react with each other,
- carbon dioxide (CO2) and/or lime milk (LM) is injected with a mixer (3, 31, 32) crosswise into liquid flow (F)
- the injecting is performed in the feed tube (2) in such a way that the dwell time of the crystallizing reaction is 0.5-10 seconds before the nozzle (20) of the reactor (1), after which the liquid flow (F) is mixed with the liquid or fiber suspension in container (4)

## Description

### Field of the Disclosure

The present invention relates to a method and a reactor to crystalize calcium carbonate and to form crystals in a liquid flow. More particularly, the invention relates to a method to produce calcium carbonate or PCC, which is used as a filler in paper and cardboard production, continually along the paper/cardboard of soft paper/tissue machine process.

The invention specifically concerns the method covered in the preamble of claim 1. The invention also concerns the reactor covered in the preamble of claim 10.

### Description of Related Art

Calcium carbonate is commonly used in paper production as well as filler and coating agent e.g. due to the strong light color and economic price of carbonate. Its use can also provide marked additional properties in soft/tissue paper applications. Calcium carbonate can be manufactured by grinding chalk, marble or limestone, in which case it is generally called GCC (Ground Calcium Carbonate). Another method to produce calcium carbonate is a chemical method, where e.g. the secondary ingredients of calcium hydroxide - calcium ions and carbon dioxide - are dissolved in water to produce carbonate ions, which are then allowed to react, and the resulting calcium carbonate precipitates from the solution into crystals, the shape of which depends e.g. on reaction conditions. The end product of this manufacturing method is called PCC, which is short for Precipitated Calcium Carbonate. This invention concentrates on the use of PCC specifically as a filler for paper or cardboard.

The production of PCC has traditionally taken place separately from paper production. PCC has until now been manufactured either in facilities near paper mills, where PCC sludge is conveyed to paper production by pumping through pipelines, or in similar facilities, from which PCC sludge is transported with a tanker to paper mills farther away. PCC produced with this method requires the use of retention agents in paper production, so PCC can adhere to fibers, irregardless of whether they are chemically or mechanically produced cellulose fibers. The traditional method of producing PCC discussed briefly above involves other problems in addition to the problems relating to the above-mentioned use of retention agents. The transportation of PCC with a tanker from a chemical factory results in transportation costs and requires the use of dispersing agents and biocides. The use of these additives deteriorates properties of PCC.

Building a separate PCC facility in connection with a factory is an expensive investment and requires many workers 24 hours a day. Additionally, a PCC facility also increases water consumption. Therefore, to reduce paper production costs, many different proposals have been made recently to produce PCC directly in the paper mill, so the transportation costs of PCC can be removed from the cost structure of paper. Additionally it has been noted, that the production of PCC in presence of fiber suspension results in better adherence of PCC crystals to the fibers, so the need for retention agents is reduced, and sometimes they can be eliminated completely. The following discusses a group of patent publications, which cover PCC production in connection with paper production.

WO A1-0107365 covers the traditional production method of PCC. The method is in general terms based on producing a suspension containing calcium ions, where calcium exists both in the form of dissolved ions and as undissolved solid matter. This suspension is then transferred to a high pressure reactor, into which gaseous carbon dioxide is introduced and the content of which is continuously mixed. In this case, the reaction of carbon dioxide and water produces carbonate ions, which further react with calcium ions to produce calcium carbonate. The process is driven by monitoring the pH value of a batch. In the beginning, i.e. before carbon dioxide is introduced, the pH of the suspension in the reactor is above 12. The feeding of carbon dioxide into the reactor is continued until pH reduces to 6.5-7.5, after which the PCC suspension can be pumped through sorting to a storage container of paper production process.

The source of calcium ions in the above process can be either calcium oxide or calcium hydroxide. The publication describes, how quick lime (CaO) is brought to the PCC facility with a train, a truck or a pneumatic pipeline from a local silo. The quick lime is slaked into calcium hydroxide using water from the factory. Steam can be added as needed, to ensure a suitable reaction temperature. The lime milk obtained from slaking is pumped through sorting, where large particles are removed, into the above-mentioned reactor. The source of the carbon dioxide fed into the reactor can be, in addition to clean CO2 introduced into the process as a liquid, also some suitable flue gas, which has been purified using a process suitable to the application.

US-A-5,223,090 describes precipitation of PCC into fibers at the paper mill in such a way that the hydrophilic properties of the fibrils of virgin stock are utilized by mixing the virgin stock first with lime milk and then bringing the resulting suspension, the water concentration of which is 40-95%, into contact with a gaseous or a liquid reagent (carbon dioxide) under heavy mixing inside a pressurized container in order to precipitate the filler particles into the fibers and especially into their lumen. One presented mixer option is a pressurized paper mass grinder.

Slow mixing of carbon dioxide and lime milk leads to an uneven size distribution of PCC crystals, because during the entire mixing process, until at least one of the chemicals is used up, the existing PCC crystals grow in size and new crystals are being created. In practice, the problem has been solved by attempting to make the mixing time of the chemicals adequately fast. This has meant in practice and in some solutions e.g. that when as evenly sized PCC as possible is desired, the carbon dioxide is dissolved into a liquid or suspension flow, and only after the time needed for the carbon dioxide to dissolve almost completely, the lime milk is mixed into the flow. At the moment the lime milk has been mixed, the time used or needed for the precipitation reaction starts; the faster and the more effectively lime milk is mixed in the flow, the shorter this time is. Faster and more effective mixing at this stage is meant to make the concentration differences in the flow as small as possible, which prevents the formation oversized PCC crystals, agglomerates and deposits. In conducted experiments it was seen that the proper mixing time in producing PCC of regular size distribution to be used in traditional paper production is around 1-3 seconds.

EP 2262948 B1 shows one way to mix carbon dioxide and lime milk into the process liquid in a fibrous web machine approach system.

### Description of the Invention

The purpose of the invention is to advance the current prior art by presenting a solution, which can easily be added to an existing process equipment by implementing relatively simple changes. One goal is to create a system, which can be connected into use even without production interruptions in the actual production line.

The goal of the invention is also to produce a functional and effective way to create a connection between PCC and fibers as well as minimize the disadvantages caused by precipitation of PCC into difficult places.

The goal of the invention is also to create a method that realizes the above-mentioned goals. Additionally, the goal of the invention is to create a reactor, that makes the method possible.

The goals of the invention are accomplished mainly according to the independent claims 1 and 10 and as presented in more detail in the other claims. The other additional characteristics of the invention are revealed in the attached claims and the following explanation of the embodiments of the figures.

One embodiment of the invention is a method for crystallizing calcium carbonate and for formation of crystals in liquid flow, with the concentration of 2.5-5%, in a solid matter fiber suspension and/or it's surfaces,
- carbon dioxide (CO₂) and lime milk (Ca(OH)₂) are fed into liquid flow to get them to react with each other
- carbon dioxide and/or lime milk is injected with a mixer crosswise into liquid flow in adequately small particles or bubbles in such a way that the carbon dioxide and/or lime milk disperses considerably evenly in the liquid flow irregardless of the flow conditions of the liquid flow, so as to create a suitable size distribution of homogenic calcium carbonate crystals, prevent the formation of oversized PCC crystals, PCC deposits and PCC precipitations and control the reaction between carbon dioxide and lime milk,
wherein the injecting is performed in the feed tube in such a way that the dwell time of the crystallizing reaction is 0.5-10 seconds before the nozzle, after which the liquid flow is mixed with the liquid or fiber suspension in a container.

One of the embodiments of the method is that in the method, injecting is performed in the feed pipe before the container in such a way that the dwell time of the crystallizing reaction is 0.5-10 seconds before the nozzle at the end of the feed pipe, where the pressure of the liquid flow decreases and after which the liquid flow is mixed with the aid of the nozzle into the fiber suspension that is already in a container.

Similarly, one embodiment of the invention is a reactor for producing calcium carbonate and for formation of crystals in a liquid flow, with the concentration of 2.5-5%, in a solid matter fiber suspension and/or it's surfaces, the reactor comprising:
- feed pipe for liquid flow, into which liquid flow carbon dioxide and lime milk can be fed to react them with each other,
- mixer for injecting carbon dioxide and/or lime milk and mixing them crosswise into the liquid flow as adequately small particles or bubbles in such a way that the carbon dioxide and/or lime milk disperses considerably evenly in the liquid flow irregardless of the flow conditions of the liquid flow, so as to create a suitable size distribution of homogenic calcium carbonate crystals, prevent the formation of oversized PCC crystals, PCC deposits and PCC precipitations and control the reaction between carbon dioxide and lime milk,
- the mixer is in the feed pipe in such a way that the dwell time of the crystallizing reaction can be arranged 0.5-10 seconds before the nozzle.

In one embodiment of the reactor, the nozzle is arranged at the end of the feed pipe away from the mixer, the nozzle comprising at least one flow limiter to lower the pressure of the liquid flow. Wherein injecting can be performed in the feed pipe in such a way that the dwell time of the crystallizing reaction can be arranged to be 0,5-10 seconds before the nozzle, after which the liquid flow can be mixed with the fiber dispersion in the container using the nozzle.

Using the above method and reactor, fiber dispersion containing PCC is produced in the production process already in an earlier state in the in-line process than presented e.g. in the publication EP2262948B1 and in such a place in the production facility, that retrofitting the reactor is easier and simpler than before and doesn't require the modification of the shape or properties of particularly critical process components. In one embodiment of the invention, the liquid flow is mixed in a mixing container or a machine chest or other container. Additionally, potential detrimental PCC deposits are not formed, and their control is easier than before. The formation of deposits on the container walls is not particularly likely, and they also don't affect the process itself as fast as deposits formed closer to the headbox or similar locations. In scaling the reactor, the planned flow rates in the pipeline and the resulting dwell times must be considered. Therefore, in practice the dwell time of the reaction determines the required feed pipe length, when the flow rate is some specific parameter defined by the rest of the process.

Advantageously, a TrumpJet mixer is used for injecting carbon dioxide and/or lime milk, which can be used to mix the carbon dioxide and lime milk with the liquid flow in the desired way.

In one embodiment of the invention, the liquid flow is mixed in a mixing container or a machine container or other container in such a way that the liquid flow arrives at the suction flow of the container mixer operating in the above-mentioned container, wherein shearing forces / mixing effect caused by the container mixer act on the liquid flow, which further mix the liquid flow with the fiber dispersion in the above-mentioned container. Therefore in practice the reactor can be installed in connection with a container in such a way that the liquid flow discharging from the reactor can be mixed in a mixing container or a machine container or other container so that the liquid flow can be directed to the suction area of the container mixer of the above-mentioned container in such a way that shearing forces from the container mixer affect the available liquid flow, which further mix the liquid flow with the fiber dispersion in the above-mentioned container. Advantageously, the liquid flow is divided in the nozzle into one dispersing partial flow or many smaller partial flows, which are directed in such a way that the dwell time of the partial flow in the container is short before arriving in the immediate influence of the container mixer rotor. This can be accomplished e.g. in such a way that the nozzle comprises one or many flow ports to disperse or divide the liquid flow into smaller partial flows, which can be directed so that the partial flow arrives at the immediate vicinity of the container mixer rotor. Short dwell time in the container means the distance of less than 1/3, 1/4 or 1/6 circumference of an imaginary flow circle or ellipse, which can be drawn on the liquid surface in the container in parallel plane defined by the bottom of the container and two opposing walls and the rotation axis of the container mixer rotor. In this case it can be considered that the flow or partial flow of the nozzle can be directed in the vicinity of the container mixer rotor in the container.

In the method of one embodiment, the liquid flow is fed below the surface of the fiber dispersion in the container. This can be accomplished by installing the reactor in such a way that the nozzle has been arranged in such a position in the container that in a normal operation the liquid flow can be discharged below the surface of the fiber dispersion in the container. The pressure in the reactor is typically 100-400 kPa, and when discharged in the container, the pressure is normal air pressure (atm) plus the hydrostatic pressure resulting from the level of the surface. If the discharge took place above the surface, the mixability of the liquid flow in the container with existing fiber dispersion would be negligible, and additionally it would be probable that there would be a marked amount of air in the fiber dispersion, which would cause undesired foaming of the fiber dispersion. The container can also be closed and pressurized, but also in this case the liquid flow would still be fed similarly below the surface.

In one embodiment the injection in the reactor is performed in such a way that the average particle size of the lime milk is below 3 micrometers (µm), advantageously below 1.5 micrometers and more advantageously below 0.5 micrometers and the bubble size of the carbon dioxide is below 100 micrometers and more advantageously the carbon dioxide has already dissolved entirely into the injection liquid before being fed into the liquid flow. Advantageously the flow rate used in injection is minimally three, maximally fifteen, advantageously 5-10 times the flow rate of the liquid flow. This mixes effectively the liquid or the gas being injected.

In one embodiment the feed pipe of the reactor is equipped with precipitation prevention protection, which can prevent the crystallizing or precipitation of calcium carbonate into the wall of the feed pipe. Most advantageously this protection has been implemented electrically, such as has been presented e.g. in the patent EP2544808B1 of the applicant. In that case the last section of the reactor between the mixer and the nozzle is most advantageously straight, but before that there can be a curved pipe, most preferably 90 degrees, wherein the electrical protection rod can be brought in the middle of the reactor feed pipe in such a way that the feed pipe and protection rod create a coaxial structure advantageous to the flow. In some cases also a coating can be used to prevent precipitation.

The advantage of the invention is e.g. its effectiveness and simplicity and economic cost as compared to other techniques.

### List of Drawings

In the following the invention and its operation is explained by referring to the attached graphical drawings, where
- Figure 1: presents as a graph one embodiment of the reactor of the invention,
- Figure 2: presents as a graph one embodiment of the reactor of the invention as installed in connection with a container,
- Figure 3: presents as a graph one embodiment of the reactor of the invention as installed in connection with a container.

### Description of the Drawings

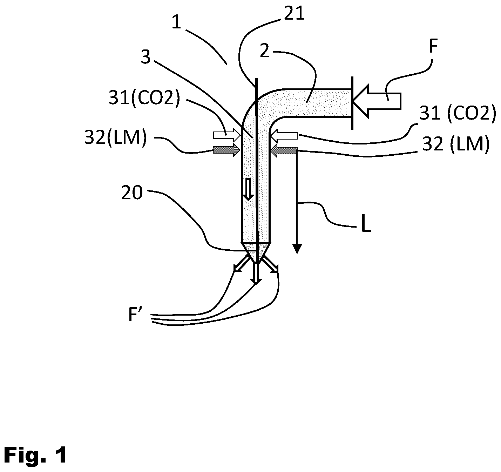

Figure 1 presents as a graph one embodiment of the reactor 1 of the invention. This is a reactor 1 for crystallizing calcium carbonate and formation of crystals in a liquid flow F with the concentration of 2.5-5% inside or on the surfaces of a fiber dispersion containing solid matter, the reactor 1 comprising:
- a feed pipe 2 for liquid flow F, into which liquid flow F carbon dioxide CO2 and lime milk LM can be fed to react them with each other,
- a mixer 3, comprising in the embodiment of figure 1 separate mixers 31 for injecting carbon dioxide CO2 and/or mixers 32 for injecting lime milk LM and mixing them crosswise into the liquid flow F as adequately small particles or bubbles in such a way that the carbon dioxide CO2 and/or lime milk LM disperses considerably evenly in the liquid flow F irregardless of the flow conditions of the liquid flow F, so as to create a suitable size distribution of homogenic calcium carbonate crystals, prevent the formation of oversized PCC crystals, PCC deposits and PCC precipitations and control the reaction between carbon dioxide CO2 and lime milk LM,
- the mixer 3, 31, 32 is in the feed pipe 2 so that the dwell time of the crystallizing reaction can be arranged 0.5-10 seconds before the nozzle 20. In practice, the dwell time required defines the length L of the feed pipe 2 between the misers 3, 31, 32 and the nozzle 20. The rate of the liquid flow F in the feed pipe is determined from the required volume flow and the diameter of the feed pipe, wherein the length L = flow rate x dwell time. Naturally it is to be considered that a part of the reaction, i.e. of the crystallization, can also take place in the container, so it is not necessary to use an extremely long length L of the feed pipe 2. The liquid flow F can be the entire feed flow or part of the feed flow of the fiber dispersion used in the production of fibrous web.

In Figure 1 is presented also an embodiment, where the feed pipe 2 is equipped with precipitation prevention protection 21, which can prevent the crystallizing or precipitation of calcium carbonate into the wall of the feed pipe 2. The last section of the reactor between the mixer 3, 31, 32 and the nozzle 20 is most advantageously straight, but before that there can be a curved pipe, most preferably 90 degrees, wherein the electrical protection rod 21 can be brought in the middle of the reactor 1 feed pipe 2 in such a way that the feed pipe 2 and protection rod 21 create a coaxial structure advantageous to the flow.

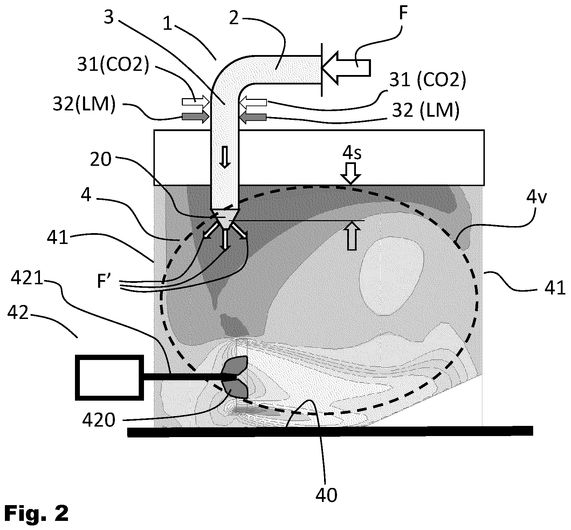

In Figure 2 the reactor 1 has been installed in its application, in connection with container 4. The reactor 1 implements a method for crystallizing calcium carbonate and for formation of crystals in liquid flow F, with the concentration of 2.5-5%, in a solid matter fiber suspension and/or it's surfaces,
- carbon dioxide CO2 (CO₂) and lime milk LM (Ca(OH)₂) are fed into liquid flow F to get them to react with each other
- carbon dioxide CO2 and/or lime milk LM is injected with a mixer 3, 31, 32 crosswise into liquid flow F in adequately small particles or bubbles in such a way that the carbon dioxide CO2 and/or lime milk LM disperses considerably evenly in the liquid flow F irregardless of the flow conditions of the liquid flow F, so as to create a suitable size distribution of homogenic calcium carbonate crystals, prevent the formation of oversized PCC crystals, PCC deposits and PCC precipitations and control the reaction between carbon dioxide CO2 and lime milk LM,
- the injecting is performed in the feed tube 2 in such a way that the dwell time of the crystallizing reaction is 0.5-10 seconds before the nozzle 20 of the reactor 1, after which the liquid flow F is mixed with the liquid or fiber suspension in container 4. In Figure 2 the liquid flow F is divided in the nozzle 20 into partial flows F'. Most advantageously the nozzle 20 has been arranged at the end of feed pipe 2 with the nozzle 20 comprising at least one flow limiter to reduce the pressure of the liquid flow F. The pressure loss in the above-mentioned nozzle 20 / flow limiter can be e.g. around 200-300 kPa.

Figure 2 shows a container 4, inside which is demonstrated the liquid volume in the space delineated by container bottom 40, container walls 41 ja container surface (surface of the liquid in the container) 4s. Reactor 1 has been installed with the container 4 in such a way that the nozzle 20 has been arranged in such a location in the container 4 that in normal use the liquid flow F can be discharged below the fiber suspension surface 4s in the container 4 (opposing arrows, arrow 4s and the other arrow below the surface represent the level of liquid above nozzle 20) to ensure mixing and to prevent foaming. If the surface level 4s in the container 4 varies markedly in different drive situations, the reactor can be equipped with an adjustable feed pipe 2, which can ensure that the location of the nozzle 20 is below the surface 4s. Further, the installation of reactor 1 and the location of the nozzle 20 have been selected in such a way that the liquid flow F can be mixed in container 4, which can be a mixing container 4 or machine container 4 or other container 4, so that liquid flow F can be directed to the rotor 420 flow field / suction area of the container mixer 42 of the above-mentioned container F (in practice, behind rotor 420) in such a way that when the container mixer 42 is being used, shearing forces / mixing effect caused by the container mixer 42 are directed to the liquid flow F, which further mix the liquid flow F with the fiber suspension in the above-mentioned container 4. Figure 1 (and Figure 2) shows inside container 4 imaginary flow situations (flow rates) in the liquid in the container, presented in different dark tones and gradient curves.

Further, Figure 2 shows, how a liquid flow F brought vertically from top to bottom is divided in the nozzle 20 into one dispersing partial flow or many smaller partial flows F', which are directed in such a way that the dwell time of the partial flow in the container 4 is short before arriving in the immediate influence of the container mixer rotor 420. Therefore, in practice the nozzle 20 comprises one or many flow ports to disperse or divide the liquid flow F into smaller partial flows F', which can be directed so that the partial flow F' arrives at the immediate vicinity of the container mixer rotor 420. This short dwell time in the container 4 or immediate vicinity can mean that the flow F or partial flow F' of the nozzle 20 can be directed to the vicinity of the rotor 420 of the container mixer 42, meaning the distance of less than 1/3, 1/4 or 1/6 circumference of an imaginary flow circle or ellipse 4v (demonstrated with broken line in Figure 2), which can be drawn on the liquid surface 4s in the container in parallel plane defined by the bottom of the container 40 and two opposing walls 41 and the rotation axis 421 of the container mixer rotor. The purpose of the imaginary flow circle 4v is to demonstrate, how large a rotating vortex the liquid in container 4 can create in container 4. The entire flow circle 4v has a definable circumference, of which 1/3, 1/4 or 1/6 can be considered to be close or within a short dwell time. Thus nozzle 20 has been arranged in such a position in container 4 that in normal use liquid flow F can be discharged below the surface 4s of the fiber suspension in container 4 and the flow F or partial flow F' of nozzle 20 can be directed inside the container near the rotor 420 of the container mixer 42 in such a way that the distance between nozzle 20 and rotor 420 is less than 1/3, 1/4 or 1/6 of circumference from the imaginary flow circle or ellipse 4v, which can be drawn on the liquid surface 4s in the container in parallel plane defined by the bottom of the container 40 and two opposing walls 41 and the rotation axis 421 of the container mixer rotor.

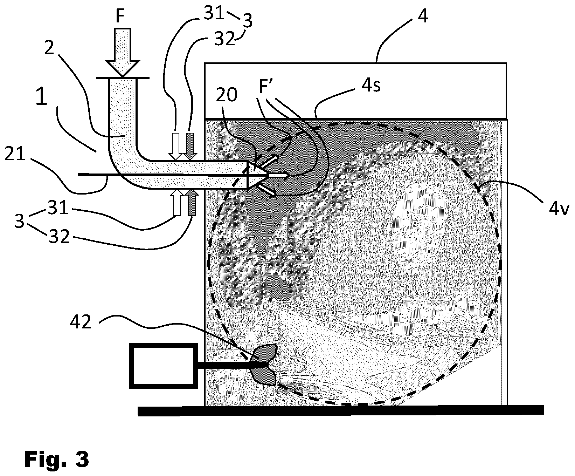

Figure 3 shows a reactor 1 corresponding to Figures 1 and 2, but in the embodiment of Figure 3, feed pipe 2 has been brought into the container 4 in horizontal direction. Reactor 1 has the same functionalities and components as presented in Figure 2; reactor 1 has been arranged for crystallizing calcium carbonate and formation of crystals in a liquid flow F with the concentration of 2.5-5% inside or on the surfaces of a fiber dispersion containing solid matter, the reactor 1 comprising:
- feed pipe 2 for liquid flow F, into which liquid flow F carbon dioxide CO2 and lime milk LM can be fed to react them with each other,
- mixer 3, 31, 32 for injecting carbon dioxide CO2 and/or lime milk LM and mixing them crosswise into the liquid flow F as adequately small particles or bubbles in such a way that the carbon dioxide CO2 and/or lime milk LM disperses considerably evenly in the liquid flow F irregardless of the flow conditions of the liquid flow F, so as to create a suitable size distribution of homogenic calcium carbonate crystals, prevent the formation of oversized PCC crystals, PCC deposits and PCC precipitations and control the reaction between carbon dioxide CO2 and lime milk LM,
- injecting can be performed in the feed tube 2 before container 4 in such a way that the dwell time of the crystallizing reaction can be arranged to be 0.5-10 seconds before the nozzle 20 at the end of feed pipe 2; nozzle 20 comprises at least one flow regulator, which lowers the pressure of the liquid flow F and after which the liquid flow F can be mixed with nozzle 20 with the fiber suspension in container 4.

Also in the embodiment of Figure 3, the nozzle 20 has been arranged in such a location in container 4 that in normal use the liquid flow F can be discharged below the surface 4p of the fiber dispersion in container 4. Further, Fig-ure 3 demonstrates that feed pipe 2 is equipped with precipitation prevention protection 21, which can prevent the crystallizing or precipitation of calcium carbonate into the wall of the feed pipe 2. A similar precipitation prevention protection 21 can also be installed in the embodiment of Figure 2 without problems. And as has been demonstrated both in Figure 2 and in Figure 3, the feed pipe 2 comprises a curved pipe, which makes it easy to bring a precipitation prevention protection 21 in the middle of the feed pie of reactor 1, preferably arranged coaxially.

It is to be noted that the above covers only a few of the most advantageous embodiments of the invention. Therefore it is clear that the invention isn't limited to the previous embodiments but can be applied in many ways as defined by the attached claims. The features presented in connection with the various embodiments can also be used, in line with the basic idea of the invention, in connection with other embodiments and/or combine various features into different setups, if it is desired and the technical readiness for them exists.

### List of Reference Numbers Used:

- 1: reactor
- 2: feed pipe
- 20: nozzle
- 21: precipitation prevention protection
- 3: mixer
- 31: mixer (for carbon dioxide)
- 32: mixer (for lime milk)
- 4: container
- 40: bottom of container
- 41: wall of container
- 4s: surface of container
- 4v: flow circle or ellipse
- 42: container mixer
- 420: container mixer rotor
- 421: rotation axis of container mixer rotor
- F: liquid flow
- F': partial liquid flow
- CO2: carbon dioxide (CO₂)
- LM: lime milk (Ca(OH)₂)
- L: feed pipe length

## Claims

1. A method for crystallizing calcium carbonate and for formation of crystals in liquid flow (F), with the concentration of 2.5-5%, in a solid matter fiber suspension and/or it's surfaces, in which method
- carbon dioxide (CO2) and lime milk (LM) (Ca(OH)₂) are fed into liquid flow (F) to get them to react with each other
- carbon dioxide (CO2) and/or lime milk (LM) is injected with a mixer (3, 31, 32) crosswise into liquid flow (F) in adequately small particles or bubbles in such a way that the carbon dioxide (CO2) and/or lime milk (LM) disperses considerably evenly in the liquid flow (F) irregardless of the flow conditions of the liquid flow (F), so as to create a suitable size distribution of homogenic calcium carbonate crystals, prevent the formation of oversized PCC crystals, PCC deposits and PCC precipitations and control the reaction between carbon dioxide (CO2) and lime milk (LM),
the method being **characterized by that**
the injecting is performed in the feed tube (2) in such a way that the dwell time of the crystallizing reaction is 0.5-10 seconds before the nozzle (20) of the reactor (1), after which the liquid flow (F) is mixed with the liquid or fiber suspension in container (4).

2. A method according to claim 1, **characterized by that** the injecting is performed in the feed pipe (2) before the container (4) in such a way that the dwell time of the crystallizing reaction is 0.5-10 seconds before the nozzle (20) at the end of the feed pipe (2), where the pressure of the liquid flow (F) decreases and after which the liquid flow (F) is mixed with the aid of the nozzle (20) into the fiber suspension that is already in a container (4).

3. A method according to claim 1 or 2, **characterized by that** the liquid flow (F) is mixed in a mixing container (4) or a machine container (4) or other container (4) in such a way that the liquid flow (F) arrives at the suction flow of the container mixer (42) operating in the above-mentioned container (4), wherein shearing forces / mixing effect caused by the container mixer (42) act on the liquid flow (F), which further mix the liquid flow (F) with the fiber dispersion in the above-mentioned container (4).

4. A method according to claim 3, **characterized by that** the liquid flow (F) is divided in the nozzle (20) into one dispersing partial flow or many smaller partial flows (F'), which are directed in such a way that the dwell time of the liquid flow (F) or the partial flow (F') in the container (4) is short before arriving in the immediate influence of the container mixer rotor (420).

5. A method according to claim 4, **characterized by that** the short dwell time in the container (4) means the distance of less than 1/3, 1/4 or 1/6 circumference of an imaginary flow circle or ellipse (4v), which can be drawn on the liquid surface (4s) in the container in parallel plane defined by the bottom of the container (40) and two opposing walls (41) and the rotation axis (421) of the container mixer rotor.

6. A method according to any previous claim, **characterized by that** the liquid flow (F) is fed below the surface (4s) of the fiber dispersion in the container (4).

7. A method according to any previous claim, **characterized by that** the average particle size of the lime milk (LM) is below 3 micrometers (µm), advantageously below 1.5 micrometers and more advantageously below 0.5 micrometers and the bubble size of the carbon dioxide (CO2) is below 100 micrometers and more advantageously the carbon dioxide (CO2) has already dissolved entirely into the injection liquid before being fed into the liquid flow (F).

8. A method according to any previous claim, **characterized by that** the feed rate used in injecting is minimally three, maximally fifteen, advantageously 5-10 times the flow rate of the liquid flow (F).

9. A method according to any previous claim, **characterized by that** the liquid flow (F) is the entire feed flow or part of the feed flow of the fiber dispersion used in the production of fibrous web.

10. Reactor (1) for crystallizing calcium carbonate and formation of crystals in a liquid flow (F) with the concentration of 2.5-5% inside or on the surfaces of a fiber dispersion containing solid matter, the reactor (1) comprising:
- feed pipe (2) for liquid flow (F), into which liquid flow (F) carbon dioxide (CO2) and lime milk (LM) can be fed to react them with each other,
- mixer (3, 31, 32) for injecting carbon dioxide (CO2) and/or lime milk (LM) and mixing them crosswise into the liquid flow (F) as adequately small particles or bubbles in such a way that the carbon dioxide (CO2) and/or lime milk (LM) disperses considerably evenly in the liquid flow (F) irregardless of the flow conditions of the liquid flow (F), so as to create a suitable size distribution of homogenic calcium carbonate crystals, prevent the formation of oversized PCC crystals, PCC deposits and PCC precipitations and control the reaction between carbon dioxide (CO2) and lime milk (LM), **characterized in that** the mixer (3, 31, 32) is in the feed pipe (2) in such a way that the dwell time of the crystallizing reaction can be arranged 0.5-10 seconds before the nozzle (20).

11. A reactor (1) according to claim 10, **characterized in that** the nozzle (20) has been arranged at the end of the feed pipe (2) at the distance (L) from the mixer (3, 31, 32), the nozzle (20) comprising at least one flow limiter in order to reduce the pressure of the liquid flow (F).

12. A reactor (1) according to claim 10 or 11, **characterized in that** the reactor has been fitted to be installed in connection with container (4), such as a mixing container (4) or a machine container (4) or other container (4), wherein the liquid flow (F) can be mixed with the nozzle (20) into the fiber dispersion in the container.

13. A reactor (1) according to claim 12, **characterized in that** the liquid flow (F) can be directed at the flow field of the rotor (420) of the container mixer (42) of the above-mentioned container (4) in such a way that during use, shearing forces / mixing effect caused by the container mixer (42) act on the liquid flow (F), which further mix the liquid flow (F) with the fiber dispersion in the above-mentioned container (4).

14. A reactor (1) according to claim 10 or 11, **characterized in that** the nozzle (20) comprises one or many flow ports to disperse or divide the liquid flow (F) into smaller partial flows (F'), which can be directed so that the partial flow (F') arrives at the immediate vicinity of the container mixer rotor (420).

15. A reactor (1) according to any preceding claim 10-14, **characterized in that** the feed pipe (2) is equipped with precipitation prevention protection (21), which can prevent the crystallizing or precipitation of calcium carbonate into the wall of the feed pipe (2).
